# EUROPEAN PATENT SPECIFICATION

(11) **EP 0 604 107 B1**
(45) Date of publication and mention of the grant of the patent: **11.06.1997**
(21) Application number: 93310091.9
(22) Date of filing: 14.12.1993
(51) Int. Cl.: B60C 1/00, B60C 11/00

(54) **Rubber composition for a tyre and a studless tyre**
Kautschukmischung für Reifen und Lauffläche ohne Noppen
Composition de caoutchouc pour pneu et bande de roulement sans tétons

(30) Priority: 14.12.1992 JP 333273/92
(43) Date of publication of application: 29.06.1994
(73) Proprietor: Sumitomo Rubber Industries Limited, Kobe-shi, Hyogo-ken (JP)
(72) Inventor: Hoshino, Hiroshi, Kobe-shi, Hyogo-ken (JP); Ishida, Youichi, Osaka-shi, Osaka-fu (JP)
(74) Representative: Stewart, Charles Geoffrey

(56) References cited:
- DATABASE WPI Week 9203, Derwent Publications Ltd., London, GB; AN 91-019218 & JP-A-3 266 705 (YOKOHAMA RUBBER KK) 27 November 1991
- DATABASE WPI Week 9203, 27 November 1991 Derwent Publications Ltd., London, GB; AN 92-192217 & JP-A-3 266 704 (YOKOHAMA RUBBER KK) 27 November 1991
- DATABASE WPI Week 9132, Derwent Publications Ltd., London, GB; AN 91-234128 & JP-A-3 152 140 (OHTSU TIRE KK) 28 June 1991
- DATABASE WPI Week 9203, Derwent Publications Ltd., London, GB; AN 91-019218 & JP-A-3 266 705
- DATABASE WPI Week 9203, 27 November 1991 Derwent Publications Ltd., London, GB; AN 92-192217 & JP-A-3 266 704
- DATABASE WPI Week 9132, Derwent Publications Ltd., London, GB; AN 91-234128 & JP-A-3 152 140

## Description

The present invention relates to a rubber composition for a tyre and a studless tyre the tread of which comprises the rubber composition.

Hitherto, as a rubber composition for a tyre, there has been known a rubber composition comprising a fibrous material have an approximate diameter of 0.001 to 0.1mm and a length of about 0.02 to 2mm. By using such a rubber composition for a tyre, there can be obtained a tyre excellent in abrasion resistance, elasticity and skid resistance.

However, when the above-mentioned rubber composition for a tyre is used to make a tread by extrusion, there arises anisotropy in the resultant tread because of an orientation of the fibrous material and therefore the effect of imparting skid resistance is reduced.

The above-mentioned anisotropy means that the physical properties of a product comprising a fibrous material becomes different in the extrusion direction from those in the other direction because of the orientation of the fibrous material during extruding. For instance, in the case of skid resistance, this means that the antislip effect is exhibited in one direction but not in the other directions.

A tyre tread composition containing a highly water-absorbent fibre is known from JP-A-3266705. JP-A-3266704 discloses a tread rubber composition containing a water-soluble inorganic compound and a single fibre, and JP-A-3152140 discloses a rubber composition comprising thin organic fibres of diameters 10-35µm.

An object of the present invention is to provide a rubber composition for a tyre, which gives a tread having little orientation of the fibrous material and thus little anisotropy even when produced by extrusion.

This and other objects of the present invention will become apparent from the following description.

According to the present invention, there is provided a rubber composition for a tyre comprising 100 parts by weight of a rubber component and characterised by 5 to 20 parts by weight of monofilament chips of a thick organic fibre selected from nylon fibre, polyester fibre and vinylon fibre having a small adhesive property of 4.9N/cm (0.5kgf/cm) or less to the rubber components and having a diameter of 0.1 to 0.3mm, a length of 0.5 to 3mm and a value of the ratio of diameter to length (diameter/length) of 0.06 to 0.6.

The minimum adhesive strength usually required for a synthetic fibre used in rubber is regarded as 49N/cm (5kgf/1cm) (according to JIS K6301, strip specimen). The term "small adhesive property" in this specification means that the adhesive strength is at most one tenth of the above-mentioned minimum adhesive strength, i.e. 49N/cm (5kgf/1cm), in other words at most 4.9N/cm (0.5kg/1cm).

When the rubber composition for a tyre of the present invention is used to make a tread by extrusion, the fibrous material is hardly oriented and therefore a tread having small anisotropy can be obtained. Thus a studless tyre excellent in skid resistance as well as elasticity and mechanical strength can be inexpensively obtained by using the rubber composition of the present invention.

The rubber composition of a tyre of the present invention comprises a rubber component and monofilament chips of an organic fibre. For the monofilament chips of organic fibre, monofilament chips of a thick organic fibre are used. Therefore, when a tread is formed by extrusion of the rubber composition for a tyre, the monofilament chips are hard to orient. Furthermore, since the monofilament chips have only little adhesive property to the rubber component, anisotropy is small, even when some orientation occurs.

The rubber component to be used in the present invention is not particularly limited, and there can be used any rubber component which is generally used. Representative examples of the rubber component are, for instance, natural rubber (NR), diene rubbers such as isoprene rubber (IR), butadiene rubber (BR) and styrene-butadiene rubber (SBR). These rubbers may be used alone or in a blend thereof.

For the monofilament chips of thick organic fibre to be used in the present invention, it is preferably to use a synthetic fibre so that the adhesive property of the organic fibre to the above-mentioned rubber component can be small. Suitable synthetic fibres are nylon, polyester and vinylon. These organic fibres may be used alone or in an admixture thereof.

The diameter of the above-mentioned monofilament chips is 0.1 to 0.3mm. If the diameter is less than 0.1mm, the influence of the orientation of the monofilament chips is so large that the skid resistance tends to lower. If the diameter is more than 0.3mm, the mechanical strength of the final tyre tends to lower.

The length of the above-mentioned monofilament chips is 0.5 to 3mm, more preferably 0.5 to 2mm. If the length is less than 0.5mm, the monofilament chips are easily scattered in the mixing step. If the length is more than 3mm, E* of viscoelasticity of the resulting rubber composition for a tyre becomes so large that the skid resistance tends to be poor.

The value of the ratio of the diameter (D) to the length (l) (D/L) is 0.06 to 0.6, more preferably 0.2 to 0.6 in order to make orientation of the fibrous material small.

The amount of the monofilament chips is 5 to 20 parts by weight, more preferably 10 to 20 parts by weight per 100 parts by weight of the above-mentioned rubber component. If the amount is less than 5 parts by weight, the skid resistance cannot be sufficiently imparted. If the amount is more than 20 parts by weight, the tensile strength of the resulting tyre tends to be too low.

To the rubber composition for a tyre of the present invention, as necessary, there can be added additives, for instance, vulcanising agents such as sulfur, vulcanisation activators such as zinc oxide and stearic acid, vulcanisation accelerators such as thiazole accelerators, e.g. 2-mercaptobenzothiazole (MBT) and dibenzothiazyldisulfide (MBTS), and sulfenamide accelerators, e.g. N-t-butyl-2-benzothiazylsulfenamide (TBBS) and N-cyclohexyl-2-benzothiazylsulfenamide (CBS), softeners such a naphthene oil and paraffin oil, pigments such as carbon black for rubber (ISAF). It is necessary to suitably change the amounts of these additives within ranges which do not prevent achieving the objects of the present invention.

The rubber composition for a tyre of the present invention can be easily obtained by the normally employed method, namely by mixing the rubber component, the monofilament chips, and if necessary, the additives.

As described above, the rubber composition can be used for a tread for a studless tyre. During the manufacture of the tread, the monofilament chips are hardly suspended and scattered in air, because the weight of the monofilament chips is large due to the large thickness of each monofilament chip and the monofilament chips have a specific D/L ratio. Therefore, there is no problem in the work-environment namely because there is no problem caused by scattering of the monofilament chips during the manufacturing process of the tread in the present invention.

The tyre of the present invention can be made by the following method. A sheet is formed from the above-mentioned rubber composition by extrusion and then the sheet is formed into a tread having the desired shape by means of a calender roll. The resulting tread is applied to a tyre carcass in the peripheral direction according to the known process to give a tyre.

In the conventional tyre, when the monofilament chips are exposed on its surface, they are not always removed from the tread. On the other hand, in the studless tyre of the present invention, the monofilament chips can be easily removed from the tread when they are exposed on the surface of the tread because the monofilament chips having a specific value of D/L ratio are used. As a result, in the tyre of the present invention, holes are produced on the surface of the tread, and therefore, the tyre can certainly grip even a little roughness on a road. Furthermore, the tyre of the present invention having exposed monofilament chips before they are removed has a "scratching effect" (in other words "grip-on-ice") of the surface of ice and thus exhibits excellent skid resistance on, for instance, a slippery frozen road.

The present invention is more specifically described and explained by means of the following Examples in which all parts are by weight unless otherwise noted.

### EXAMPLE 1 TO 3 AND COMPARATIVE EXAMPLE 1

The components shown in Table 1 were mixed by means of a mixer to give a rubber composition for a tyre. Using the rubber composition a S100Z type studless tyre having a tyre size of 175/70 R13 was made. Tests for the tyre were carried out on a frozen road according to the following method. The results are shown in Table 1 together with the components of the rubber composition for a tyre.

In the preparation of the rubber compositions and tyres, no scatter of monofilament chips was observed.

### (Test of tyre on frozen road)

- Place: : frozen road test course in Nayoro, Hokkaido, Japan
- Air temperature: : -8°C
- Test car: : FF type 1500cc passenger car made in Japan
- Rim: : 5J x 13 (inch)
- Inner pressure: : 186.32kN/m² (1.9kg/cm²)
- Test method: : The friction factor was calculated from the braking distance measured with wheel locking from a speed of 30km/h, and the results were represented as a relative value to the measured value, which is regarded as 100, in Comparative Example 1

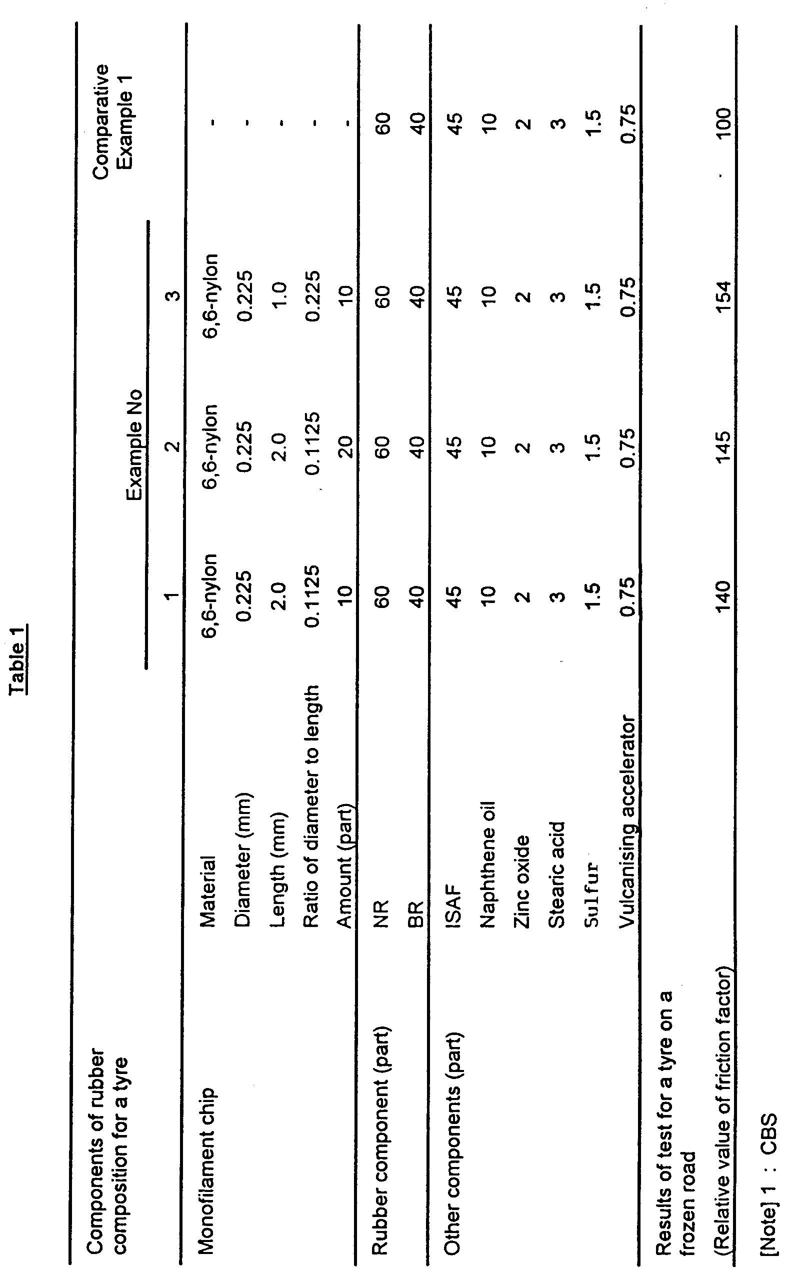

From the results of Examples 1 to 3 and Comparative Example 1 shown in Table 1, it is seen that the skid resistance on a frozen road is improved by mixing monofilament chips with the rubber component.

### EXAMPLES 4 TO 10 AND COMPARATIVE EXAMPLES 2 TO 8

The components shown in Table 2 were mixed by means of a mixer to give a rubber composition for a tyre. By using the obtained rubber composition for a tyre, there was prepared a studless tyre in the same manner as described in Examples 1 to 3 and Comparative Example 1.

As physical properties of the resultant studless tyre, there were examined the skid resistance at low temperatures, the viscoelasticity, the tensile property and the rubber hardness Hs according to the following methods. The results are shown in Table 2 together with the components of the rubber composition for a tyre.

In the preparation of the rubber compositions and tyres, no scatter of monofilament chips was observed.

### Skid resistance at low temperatures)

Skid resistance was measured at a temperature of -10° C by means of a portable skid resistance tester (skid resistance tester MODEL TR-300 commercially available from Tanifuji Machine Industries Co Ltd).

The skid resistance was calculated as a relative value to the measured value, regarded as 100 for the tyre which does not contain monofilament chips.

### (Viscoelasticity)

A test piece having a width of 4mm, a length of 30mm in the extruding direction (namely in the peripheral direction of the tyre) and a thickness of 2mm in the radial direction of the tyre was prepared by cutting the tread of the tyre. The viscoelasticity of the test piece was measured under the conditions of frequency of 10Hz, temperature of 70°C and dynamic strain of 2% by means of a viscoelastic spectrometer VES-F-III commercially available from Iwamoto Seisakisho Co Ltd.

### (Tensile property)

The tensile strength (T_{B}) and a tensile elongation (E_{B}) were measured according to the method defined in JIS K 6301.

### (Rubber hardness Hs)

The rubber hardness HS (JIS-A) was measured at 20°C and -10°C according to the method defined in JIS K 6301.

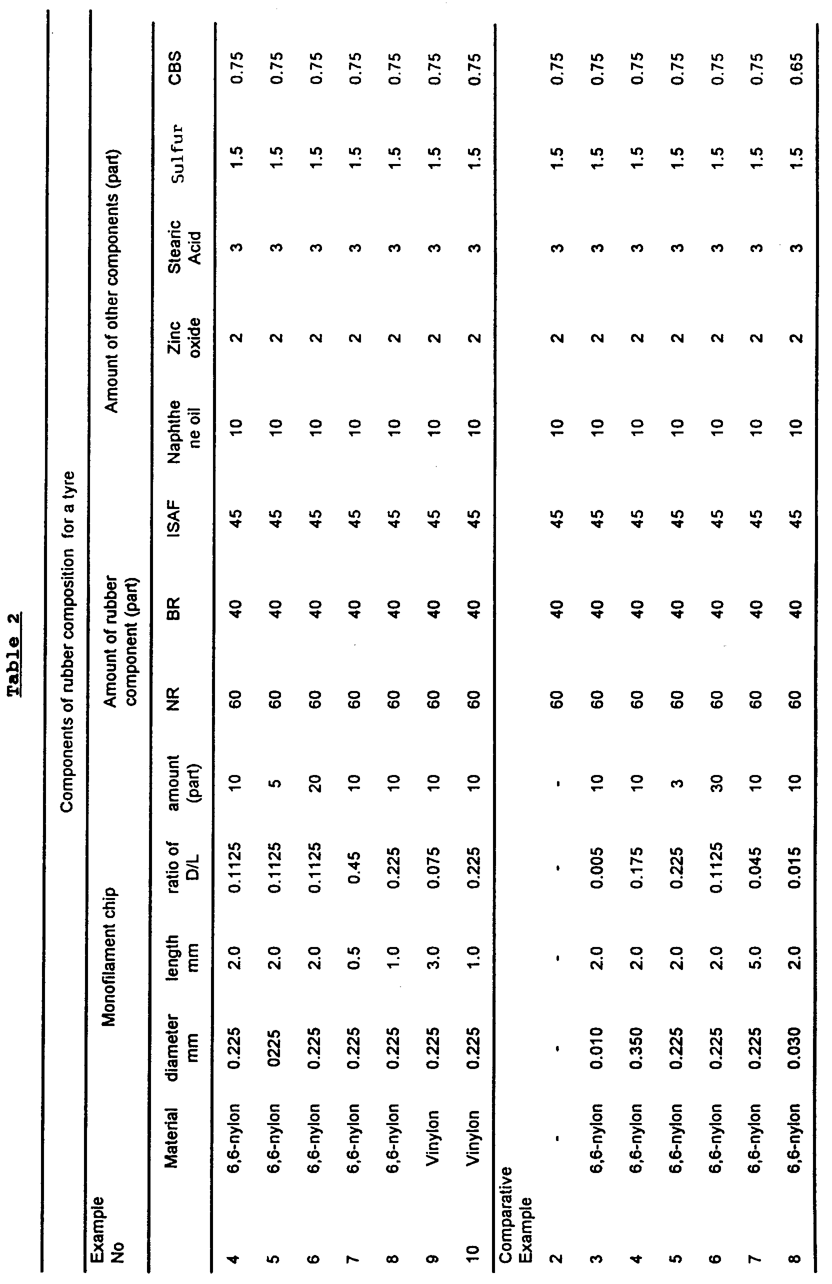

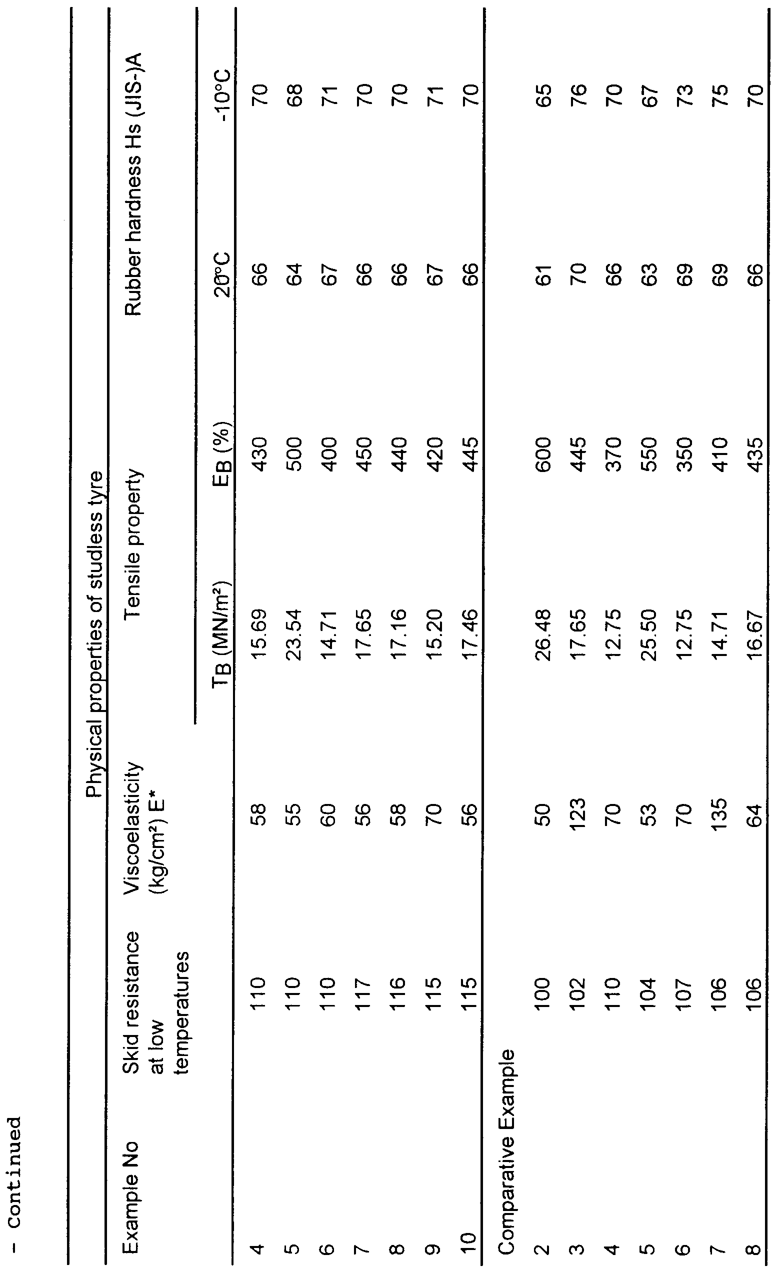

From the results of Examples 4 to 10 and Comparative Examples 2 to 8 shown in Table 2, it is clear that the tyre using the rubber composition of the present invention has various excellent physical properties such as excellent skid resistance at low temperatures, suitable viscoelasticity, excellent tensile property and suitable rubber hardness which hardly changes according to change of temperatures.

In addition to the ingredients used in the Examples, other ingredients can be used in the Examples as set forth in the specification to obtain substantially the same results.

## Claims

1. A rubber composition for a tyre comprising 100 parts by weight of a rubber component characterised by 5 to 20 parts by weight of monofilament chips of a thick organic fibre selected from nylon fibre, polyester fibre and vinylon fibre having a small adhesive property to the rubber component of 4.9N/cm (0.5kgf/cm) or less and having a diameter of 0.1 to 0.3mm, a length of 0.5 to 3mm and a value of the ratio of diameter to length (diameter/length) of 0.06 to 0.6.

2. A studless tyre having a tread comprising a rubber composition for a tyre comprising 100 parts by weight of a rubber component characterised by 5 to 20 parts by weight of monofilament chips of a thick organic fibre selected from nylon fibre, polyester fibre and vinylon fibre having a small adhesive property of 4.9N/cm (0.5kgf/cm) or less to the rubber component and having a diameter of 0.1 to 0.3mm, a length of 0.5 to 3mm and the value of the ratio of the diameter to the length (diameter/length) of 0.06 to 0.6.

## Patentansprüche

1. Kautschukzusammensetzung für einen Reifen, die 100 Gewichtsteile einer Kautschukkomponente umfaßt, gekennzeichnet durch 5 bis 20 Gewichtsteile Monofaserfragmente einer dicken organischen Faser, die aus Nylonfaser, Polyesterfaser und Vinylonfaser ausgewählt ist, die eine kleine Haftfähigkeit zu der Kautschukkomponente von 4,9N/cm (0,5kgf/cm) oder weniger aufweist und einen Durchmesser von 0,1 bis 0,3 mm, eine Länge von 0,5 bis 3 mm und einen Wert des Verhältnisses von Durchmesser zu Länge (Durchmesser/Länge) von 0,06 bis 0,6 aufweist.

2. Stollenloser Reifen, der eine Lauffläche aufweist, die eine Kautschukzusammensetzung für einen Reifen umfaßt, die 100 Gewichtsteile einer Kautschukkomponente umfaßt, gekennzeichnet durch 5 bis 20 Gewichtsteile Monofaserfragmente einer dicken organischen Faser, die aus Nylonfaser, Polyesterfaser und Vinylonfaser ausgewählt ist, die eine kleine Haftfähigkeit von 4,9N/cm (0,5kgf/cm) oder weniger zu der Kautschukkomponente aufweist und einen Durchmesser von 0,1 bis 0,3 mm, eine Länge von 0,5 bis 3 mm und den Wert des Verhältnisses des Durchmessers zu der Länge (Durchmesser/Länge) von 0,06 bis 0,6 aufweist.

## Revendications

1. Composition de caoutchouc destinée à un pneumatique, contenant 100 parties en poids d'un élément de caoutchouc caractérisée par 5 à 20 parties en poids de morceaux de monofilament de fibres organiques épaisses choisies parmi les fibres de "Nylon", de polyester et de "Vinylon" ayant une faible propriété d'adhérence à l'élément de caoutchouc inférieure ou égale à 4,9 N/cm (0,5 kgf/cm) et ayant un diamètre de 0,1 à 0,3 mm, une longueur de 0,5 à 3 mm et une valeur du rapport du diamètre à la longueur (diamètre/longueur) comprise entre 0,06 et 0,6.

2. Pneumatique sans crampon ayant une bande de roulement contenant une composition de caoutchouc pour pneumatique, contenant 100 parties en poids d'un élément de caoutchouc, caractérisé par 5 à 20 parties en poids de morceaux de monofilament de fibres organiques épaisses choisies parmi les fibres de "Nylon", de polyester et de "Vinylon" ayant une faible propriété d'adhérence inférieure ou égale à 4,9 N/cm (0,5 kgf/cm) vis-à-vis de l'élément de caoutchouc, et ayant un diamètre de 0,1 à 0,3 mm, une longueur de 0,5 à 3 mm et un rapport du diamètre à la longueur (diamètre/longueur) dont la valeur est comprise entre 0,06 et 0,6.
